# EUROPÄISCHE PATENTSCHRIFT

(11) **EP 1 260 536 B1**
(45) Veröffentlichungstag und Bekanntmachung des Hinweises auf die Patenterteilung: **26.09.2007**
(21) Anmeldenummer: 02009117.9
(22) Anmeldetag: 24.04.2002
(51) Int. Cl.: C08G 65/332, C08L 71/02, C08F 290/06, C04B 24/26

(54) **Verwendung wässerlöslichen Polymerisate von Estern aus Acrylsäure, Methacrylsäure und Alkylpolyalkylenglycolen als Zusatz zu zementösen Systemen**
Use of water-soluble polymers from esters of acrylicacid,methacrylic acid and alkyl polyalkylene glycols as additives for cement.
Utilisation d'esters hydrosolubles dans l'eau à partir d'acide acrylique et methacrylique et de alkylpolyalkyléne glycols comme additifs à ciement

(30) Priorität: 22.05.2001 DE 10125238
(43) Veröffentlichungstag der Anmeldung: 27.11.2002
(73) Patentinhaber: BASF Aktiengesellschaft, 67056 Ludwigshafen (DE)
(72) Erfinder: Kroner, Matthias, Dr., 67304 Eisenberg (DE); Büchner, Karl-Heinz, 68804 Altlussheim (DE); Brodt, Gregor, Dr., 64646 Heppenheim (DE)

(56) Entgegenhaltungen:
- EP-A- 0 884 290
- EP-A- 0 989 108
- WO-A-01/40337
- WO-A-01/94518
- US-B1- 6 214 958

## Beschreibung

Die vorliegende Erfindung betrifft die Verwendung wasserlöslicher Polymerisate von Estern aus Acrylsäure, Methacrylsäure und Alkylpolyalkylenglykolen, welche erhältlich sind durch azeotrope Veresterung einer Mischung von Acrylsäure (A), Methacrylsäure (B) und einem Alkylpolyalkylenglykol (C) mit einem Molgewicht M_{w} von 350 bis 4000, in der das Molverhältnis von (A) zu (C) 0,1 bis 4 : 1, das Molverhältnis von (B) zu (C) 1 bis 5 : 1 und das Molverhältnis der Summe von (A) und (B) zu (C) 2 bis 6 : 1 beträgt, in Gegenwart eines organischen Lösungsmittels, das mit Wasser ein Azeotrop bildet, zu mindestens 85 Gew.-%, bezogen auf das Alkylpolyalkylenglykol, und anschließende radikalische Polymerisation des bei der Veresterung erhaltenen Gemisches in wäßrigem Medium, wobei man das organische Lösungsmittel während der Polymerisation azeotrop aus dem Reaktionsgemisch abdestilliert und das abdestillierte Wasser in das Gemisch zurückführt oder durch Zufuhr von frischem Wasser ersetzt, als Zusatz zu zementösen Systemen, insbesondere als Verflüssiger.

Außerdem betrifft die Erfindung die Verwendung der Polymerisate als Mahlhilfsmittel.

Wasserlösliche Polymerisate auf Basis von Polycarbonsäure-Alkylpolyalkylenglykol-Estern sind aufgrund ihrer besonders guten Dispergierung von Zement in wäßrigen Suspensionen von zunehmendem technischen Interesse für die Bauindustrie, wo sie als Betonverflüssiger eingesetzt werden. Sie lösen dabei die bisherigen Betonverflüssiger auf Basis von Melamin- oder Naphthalin-Formaldehyd-Sulfonaten ab, da sie eine bedeutend höhere Dispergierfähigkeit besitzen.

Bei den bislang bekannten Polycarbonsäure-Alkylpolyethylenglykol-Estern besteht noch der Nachteil, daß sie in der Regel nicht breit anwendbar sind, sondern jeweils nur für bestimmte Zementarten wirksam sind.

Aus der EP-A-989 108 sind Dispergiermittel für Beton auf Basis polymerer Ester von Acrylsäure oder Methacrylsäure und Methylpolyethylenglykol bekannt, die durch azeotrope Veresterung von Acrylsäure oder Methacrylsäure und Methylpolyethylenglykol in Cyclohexan, anschließenden Ersatz des Cyclohexans durch zugesetztes Wasser mittels azeotroper Destillation und Polymersiation der erhaltenen 80 gew.-%igen wäßrigen Esterlösung in Wasser hergestellt werden. Es handelt sich hierbei um einen dreistufigen Herstellungsprozeß, bei dem im Destillationsschritt auch Probleme mit der Verunreinigung der Apparatur durch mitabdestillierte (Meth)Acrylsäure auftreten, weshalb die Zuführung eines Polymerisationsinhibitors in den Kühler erforderlich ist. Außerdem zeigen die auf diese Weise erhaltenen Verbindungen nichtzufriedenstellende Anwendungseigenschaften.

In der EP-A-931 799 werden Dispergiermittel für Beton beschrieben, die sich von den erfindungsgemäßen Polymerisaten durch die Zusammensetzung unterscheiden und durch Polymerisation von 48 Teilen Butylpolyethylenglykolmethacrylat, 45 Teilen Butylpolyethylenglykolacrylat (Molgewicht des Butylpolyethylenglykols jeweils 5792), 2 Teilen Methacrylsäure und 5 Teilen Acrylsäure erhalten werden.

Die ältere deutsche Patentanmeldung 199 57 177.5 betrifft Dispergiermittel auf Basis polymerer Ester von Methacrylsäure und Methylpolyethylenglykol.

Der Erfindung lag die Aufgabe zugrunde, Betonverflüssiger bereitzustellen, die sich durch vorteilhafte Anwendungseigenschaften, insbesondere durch breite Einsatzbarkeit für unterschiedliche zementöse Systeme, unabhängig von deren Herkunft und Zusammensetzung, auszeichnen und auf wirtschaftliche Weise herzustellen sind.

Demgemäß wurden die Verwendung der eingangs definierten wasserlöslichen Polymerisate von Estern aus Acrylsäure, Methacrylsäure und Alkylpolyalkylenglykolen gefunden.

Zur Herstellung der erfindungsgemäßen Polymerisate wird ein Gemisch von Acrylsäure (A), Methacrylsäure (B) und Alkylpolyalkylenglykol (C) eingesetzt, das einer vorzugsweise sauer katalysierten, azeotropen Veresterung unterworfen wird. In diesem Gemisch liegen die Komponenten in folgenden Mengen vor: Das Molverhältnis von (A) zu (C) beträgt 0,1 bis 4 : 1, bevorzugt 0,5 bis 2 : 1, das Molverhältnis von (B) zu (C) liegt bei 1 bis 5 : 1, vorzugsweise bei 1 bis 4 : 1. Das Molverhältnis der Summe von (A) und (B) zu (C) beträgt dabei 2 bis 6 : 1, insbesondere 2,5 bis 5 : 1. Die überschüssige, nicht mit dem Alkylpolyalkylenglykol reagierende Acrylsäure (A) und Methacrylsäure (B) verbleiben in der bei der Veresterung erhaltenen Mischung und reagieren als Comonomere bei der anschließenden radikalischen Polymerisation. Manchmal kann es von Vorteil sein, wenn zur Veresterung zusätzlich zu Acrylsäure (A) und Methacrylsäure (B) bis zu 0,5 mol einer weiteren monoethylenisch ungesättigten Carbonsäure, wie Maleinsäure, Maleinsäureanhydrid oder Fumarsäure, eingesetzt werden. Bevorzugt wird die Veresterung jedoch in Abwesenheit dieser Säuren vorgenommen.

Die azeotrope Veresterung von Acrylsäure (A) und Methacrylsäure (B) mit dem Alkylpolyalkylenglykol (C) erfolgt in Gegenwart eines organischen Lösungsmittels, das mit Wasser ein Azeotrop bildet, und kann nach an sich bekannten Verfahren vorgenommen werden. Das organische Lösungsmittel wird dabei auch als Schleppmittel bezeichnet. Bei der azeotropen Veresterung wird das bei der Reaktion entstehende Wasser azeotrop aus dem Reaktionsgemisch entfernt.

Die Veresterung wird mindestens soweit geführt, bis ein Umsatz von 85 Gew.-%, vorzugsweise mindestens 90 Gew.-%, bezogen auf das Alkylpolyalkylenglykol (C), erreicht ist. Der Umsatz kann dabei anhand der Abnahme der Säurezahl ((Meth)Acrylsäure) oder der OH-Zahl (Alkylpolyalkylenglykol) des Reaktionsgemisches verfolgt werden. Außerdem besteht nach der Polymerisation die Möglichkeit, mit Hilfe von Gelpermeationschromatographie-Untersuchungen (GPC) den unveresterten Anteil an Alkylpolyalkylenglykol (C) neben dem Polymer zu ermitteln.

Als veresterndes Alkylpolyalkylenglykol (C) eignen sich erfindungsgemäß insbesondere Verbindungen der allgemeinen Formeln
R¹-(O-CHR²-CHR³)ₙ-OH und R¹-(O-CH₂-CH₂-CH₂-CH₂)ₙ-OH
in denen die Variablen folgende Bedeutung haben:
- R¹: C₁-C₅₀-Alkyl, bevorzugt C₁-C₄-Alkyl, oder C₁-C₁₈-Alkylphenyl;
- R², R³: unabhängig voneinander Wasserstoff, Methyl oder Ethyl;
- n: 5 bis 90.

Das Molgewicht M_{w} der Alkylpolyalkylenglykole (C) beträgt 350 bis 4000, bevorzugt 500 bis 2000, besonders bevorzugt 750 bis 1500 und ganz besonders bevorzugt etwa 1000.

Besonders bevorzugt werden Alkylpolyethylenglykole und ganz besonders bevorzugt Methylpolyethylenglykole der genannten Molgewichte eingesetzt.

Weiterhin sind als Alkylpolyalkylenglykol (C) auch Alkyl- (insbesondere Methyl)-polyalkylenglykole geeignet, die Einheiten von Propylenoxid und/oder Butylenoxid in Kombination mit Einheiten von Ethylenoxid enthalten. Gleiche Einheiten können dabei blockweise oder statistisch angeordnet sein.

Beispiele hierfür sind Methylpolyalkylenglykole, die durch Anlagerung von Ethylenoxid und Propylenoxid an einwertige aliphatische Alkohole, insbesondere durch Anlagerung von
5 mol Ethylenoxid und 1 mol Propylenoxid,
5 mol Ethylenoxid und 3 mol Propylenoxid,
5 mol Ethylenoxid und 10 mol Propylenoxid,
10 mol Ethylenoxid und 1 mol Propylenoxid,
10 mol Ethylenoxid und 3 mol Propylenoxid,
10 mol Ethylenoxid und 10 mol Propylenoxid,
20 mol Ethylenoxid und 1 mol Propylenoxid,
20 mol Ethylenoxid und 3 mol Propylenoxid,
20 mol Ethylenoxid und 10 mol Propylenoxid,
25 mol Ethylenoxid und 1 mol Propylenoxid,
25 mol Ethylenoxid und 3 mol Propylenoxid bzw.
25 mol Ethylenoxid und 10 mol Propylenoxid
an 1 mol Methanol, Ethanol, n-Propanol, Isopropanol oder Butanol erhältlich sind.

Es kann auch teilverethertes Polytetrahydrofuran eingesetzt werden, das einseitig als Endgruppe eine Alkylgruppe, vorzugsweise eine C₁-C₄-Alkylgruppe, trägt.

Die Wirksamkeit der Copolymerisate im jeweiligen zementösen System kann weiter erhöht werden, wenn Mischungen aus Alkylpolyalkylenglykolen (C) mit unterschiedlichen Molgewichten eingesetzt werden.

Geeignete Mischungen haben beispielsweise folgende Zusammensetzungen:
30 Gew.-% Methylpolyethylenglykol (M_{w} 350) und 70 Gew.-% Methylpolyethylenglykol (M_{w} 1000),
50 Gew.-% Methylpolyethylenglykol (M_{w} 350) und 50 Gew.-% Methylpolyethylenglykol (M_{w} 2000),
70 Gew.-% Methylpolyethylenglykol (M_{w} 350) und 30 Gew.-% Methylpolyethylenglykol (M_{w} 4000),
30 Gew.-% Methylpolyethylenglykol (M_{w} 500) und 70 Gew.-% Methylpolyethylenglykol (M_{w} 1000),
30 Gew.-% Methylpolyethylenglykol (M_{w} 500) und 70 Gew.-% Methylpolyethylenglykol (M_{w} 2000),
30 Gew.-% Methylpolyethylenglykol (M_{w} 750) und 70 Gew.-% Methylpolyethylenglykol (M_{w} 1000),
30 Gew.-% Methylpolyethylenglykol (M_{w} 750) und 70 Gew.-% Methylpolyethylenglykol (M_{w} 2000),
50 Gew.-% Methylpolyethylenglykol (M_{w} 1000) und 50 Gew.-% Methylpolyethylenglykol (M_{w} 2000),
90 Gew.-% Methylpolyethylenglykol (M_{w} 1000) und 10 Gew.-% Methylpolyethylenglykol (M_{w} 4000),
90 Gew.-% Methylpolyethylenglykol (M_{w} 1000) und 10 Gew.-% Methylpolypropylenglykol (M_{w} 1350),
90 Gew.-% Methylpolyethylenglykol (M_{w} 1000) und 10 Gew.-% Methylpolypropylenglykol (M_{w} 2000) und
90 Gew.-% Methylpolyethylenglykol (M_{w} 1000) und 10 Gew.-% Methylpolyethylenglykol/Methylpropylenglykol-Copolymer im Molverhältnis 90:10 (M_{w} 1000).

Zweckmäßigerweise wird die Veresterung in Gegenwart eines Katalysators vorgenommen. Als Katalysator können dabei alle organischen und anorganischen Säuren eingesetzt werden. Beispiele für geeignete saure Katalysatoren sind Schwefelsäure, schweflige Säure, Di- und Polyschwefelsäure, Schwefeltrioxid, Methansulfonsäure, Benzolsulfonsäure, p-Toluolsulfonsäure, C₂-C₃₀-Alkylbenzolsulfonsäuren, Schwefelsäuremonoester von C₁-C₃₀-Alkoholen und Alkylpolyalkylenglykolen, Phosphorsäure, phosphorige Säure, unterphosphorige Säure, Polyphosphorsäure, Salzsäure, Perchlorsäure und saure Ionenaustauscher. Bevorzugt sind p-Toluolsulfonsäure und Methansulfonsäure, besonders bevorzugt ist p-Toluolsulfonsäure.

Die Menge an Katalysator, bezogen auf die Summe aus Acrylsäure (A), Methacrylsäure (B) und Alkylpolyalkylenglykol (C), beträgt im allgemeinen bis zu 10 Gew.-%, bevorzugt 0,05 bis 7 Gew.-% und besonders bevorzugt 0,1 bis 5 Gew.-%.

Als Schleppmittel bei der Veresterung geeignete organische Lösungsmittel sind aliphatische (isoaliphatische und linearaliphatische), cycloaliphatische, aliphatisch-aromatische und rein aromatische Kohlenwasserstoffe. Der Siedepunkt besonders geeigneter organischer Lösungsmittel liegt in der Regel bei 60 bis 300°C, vorzugsweise bei 70 bis 150°C.

Beispiele für geeignete organische Lösungsmittel sind im einzelnen:
n-Paraffine wie Hexan, Decan, Undecan, Dodecan und Octadecan;
Isoparaffine wie Isooctan, Isodecan, Isododecan, Isohexadecan und Isooctadecan;
Cycloparaffine wie Cyclohexan, Methylcyclohexan und Dimethylcyclohexan;
Aromaten wie Benzol, Toluol, o-, m- und p-Xylol, Xylolgemische, Trimethylbenzol, Tetramethylbenzol, Mesitylen, Ethylbenzol, Isopropylbenzol, n-Butylbenzol und Isobutylbenzol.

Bevorzugt sind dabei Cyclohexan, Methylcyclohexan, Toluol, Xylolgemische und o-Xylol, wobei Toluol besonders bevorzugt ist.

Es können auch technisch verfügbare, einen Siedebereich aufweisende Mischungen aus verschiedenen organischen Lösungsmitteln verwendet werden. Solche Mischungen werden auch als Spezialbenzine, Petroleumbenzine, Siedegrenzenbenzine, Naphtha und Petroletherfraktionen bezeichnet. Sie fallen oft als Raffineriefräktionen an und können durch Oligomerisierungen und Hydrierungen gezielt aus Steamcracker-Olefinen hergestellt werden. Beispiele für solche Siedegrenzenbenzine sind Benzine mit Siedebereichen von 90 bis 100°C, 100 bis 140°C und 140 bis 160°C. Die Fraktionen können je nach Herkunft rein linearaliphatisch, rein isoaliphatische, rein aliphatisch-aromatische oder rein aromatische Bestandteile enthalten.

Übersichten zu den technisch zugänglichen Kohlenwasserstoffgemischen sind zu finden in: Kirk-Othmer, Encyclopedia of Chemical Technology, 1995, Vol. 13, Seiten 744 ff, Kapitel Hydrocarbons, und Vol. 12, Seiten 126 ff, Kapitel Fuels, sowie Seiten 341 ff, Kapitel Gasoline; Ullmann's Encyclopedia of Industrial Chemistry, 1989, Vol. A13, Seiten 227-281, im Kapitel Hydrocarbons, und Vol. A16, Seiten 719-755, im Kapitel Motor Fuels.

Das Schleppmittel bildet zusammen mit Wasser ein azeotropes Gemisch, das in der Regel einen Siedepunkt unter dem des niedriger siedenden Bestandteils aufweist. Die Siedepunkte der azeotropen Gemische liegen bevorzugt im Bereich von 70 bis 130°C.

Der Anteil an Schleppmittel in der Reaktionmischung beträgt üblicherweise 5 bis 50 Gew.-%, bevorzugt 10 bis 40 Gew.-%, bezogen auf die Summe aus Acrylsäure (A), Methacrylsäure (B) und Alkylpolyalkylenglykol (C). Die Menge an Schleppmittel wird dabei erfindungsgemäß vorteilhaft so gewählt, daß das Schleppmittel in der Reaktionsmischung einen Siedepunkt von 100 bis 150°C, vorzugsweise 110 bis 140°C, besitzt. Die Siedepunkte der Azeotrope und der Schleppmittel sind in der bei der Veresterung vorliegenden Mischung meist höher als die der reinen Substanzen.

Um das einseitig endgruppenverschlossene Alkylpolyalkylenglykol (C) während der Veresterung vor oxidativem Abbau zu schützen, können gewünschtenfalls Reduktionsmittel zugesetzt werden. Geeignete Reduktionsmittel sind z.B. Phosphorverbindungen wie hypophosphorige Säure und phosphorige Säure und Schwefelverbindungen wie Schwefeldioxid, Thiosulfat und Dithionit. Selbstverständlich können auch Reduktionsmittelmischungen zum Einsatz kommen.

Wenn Reduktionsmittel eingesetzt wird, dann beträgt die Menge im allgemeinen bis zu 5 Gew.-%, bevorzugt bis 2 Gew.-%, bezogen auf Alkylpolyalkylenglykol (C).

Um eine vorzeitige Polymerisation von Acrylsäure, Methacrylsäure, Acrylsäureester und Methacrylsäureester zu verhindern, werden dem bei der Veresterung eingesetzten Gemisch vorteilhaft übliche Polymerisationsinhibitoren wie Phenothiazin, Hydrochinonmonomethylether oder Di-tert.-butyl-p-kresol zugesetzt.

In der Regel liegt die Inhibitormenge bei 0,001 bis 2 Gew.-%, vorzugsweise bei 0,005 bis 0,5 Gew.-%, bezogen auf Acrylsäure und Methacrylsäure.

Die Veresterung wird üblicherweise bei 80 bis 200°C, bevorzugt bei 90 bis 170°C und besonders bevorzugt bei 110 bis 140°C durchgeführt.

Zweckmäßigerweise wird die Veresterung unter inerten Bedingungen vorgenommen. Vorteilhaft leitet man während der Veresterung einen Stickstoffstrom durch die Reaktionsmischung, wodurch das Abdestillieren des Azeotrops unterstützt wird. Bevorzugt leitet man pro h das 0,1 bis 5-fache, insbesondere das 0,5 bis 2-fache Volumen des Reaktorinhalts an Stickstoff durch die Reaktionsmischung.

Verfahrenstechnisch geht man vorteilhaft so vor, daß man das Azeotrop in einem Wärmetauscher kondensiert und in einem Phasentrenngefäß in eine obere organische Phase und eine untere Wasserphase trennt. Durch eine entsprechende Rohrleitungsführung leitet man die organische Phase wieder in den Veresterungsreaktor zurück. Als Veresterungsreaktor eignen sich dabei alle üblicherweise verwendeten Destillationsapparate, z.B. Rührkesselreaktoren, Blasendestillationsapparate mit und ohne Umwälzkreis, Dünnschichtverdampfer, Fallfilmverdampfer und Rohrbündelverdampfer. Der Verlauf der Veresterung kann verfolgt werden, indem die gebildete Menge Wasser, die Säurezahl und/oder die OH-Zahl des Reaktionsgemisches an Proben titrimetrisch ermittelt wird.

Die Veresterung wird so weit geführt, bis die Wassermenge nicht mehr zunimmt bzw. die Säurezahl oder OH-Zahl nicht mehr abnimmt. In Abhängigkeit vom Alkoxylierungsgrad des Alkylpolyalkylenglykols (C) benötigt man hierfür unterschiedliche Zeiten. Je höher der Alkoxylierungsgrad ist, um so länger dauert die Veresterung.

Das organische Lösungsmittel kann nach abgeschlossener Veresterung in der Veresterungsmischung verbleiben. Üblicherweise enthalten die Mischungen 10 bis 40 Gew.-%, vorzugsweise 15 bis 30 Gew.-%, organisches Lösungsmittel.

Die erhaltenen Veresterungsmischungen enthalten üblicherweise weiterhin neben Katalysator und Inhibitoren folgende Monomere, die bei der anschließenden radikalischen Polymerisation reagieren können: Acrylsäure, Methacrylsäure, Acrylsäure-Alkylpolyalkylenglykol-Ester und Methacrylsäure-Alkylpolyalkylenglykol-Ester sowie Polyalkylenglykoldiacrylsäure- und Polyalkylenglykoldimethacrylsäure-Ester in Mengen unter 5 Gew.-%, bevorzugt unter 3 Gew.-%.

Die erhaltenen flüssigen Veresterungsmischungen sind lagerfähig, ohne Hydrolyse zu zeigen. Für die anschließende Polymerisation können sie ohne vorherige Reinigungsoperation eingesetzt werden.

Die radikalische Polymerisation der Veresterungsmischung erfolgt in wäßrigem Medium, wobei gleichzeitig das organische Lösemittel durch azeotrope Destillation aus dem Polymerisationsreaktor entfernt wird.

Im Gegensatz zu den in den EP-A-989 108 und 931 799 beschriebenen Polymerisationsverfahren ist beim erfindungsgemäßen Verfahren während der gesamten Polymerisation immer organisches Lösungsmittel in kleinen Mengen anwesend und beeinflußt damit die Löslichkeit und das Polymerisationsverhalten der Monomeren positiv. Die Mengen an organischem Lösungsmittel sind annähernd konstant, da das organische Lösungsmittel ständig durch das Veresterungsprodukt in den Polymerisationsreaktor eingetragen wird und gleichzeitig durch azeotrope Destillation ständig aus dem Reaktor entfernt wird. Es bildet sich somit während der Polymerisation eine Gleichgewichtskonzentration an organischem Lösungsmittel von etwa 0,01 bis 5 Gew.-%, bezogen auf das wäßrige Polymerisatlösung, aus.

Als Polymerisationsinitiator können alle bekannten wasserlöslichen Peroxo- und Azoinitiatoren eingesetzt werden. Besonders bevorzugte Polymerisationsinitiatoren sind Wasserstoffperoxid und Natrium-, Kalium- und Ammoniumperoxodisulfat. Die Mengen an Initiator betragen üblicherweise 0,1 bis 10 Gew.-%, vorzugsweise 0,5 bis 5 Gew.-%, bezogen auf die zu polymerisierenden Monomeren.

Das Molgewicht der Polymerisate kann vorteilhaft mit Hilfe von Polymerisationsreglern gezielt eingestellt werden, die Anwesenheit von Polymerisationsreglern ist jedoch nicht erforderlich. Als Polymerisationsregler werden vorzugsweise wasserlösliche Schwefel-, Stickstoff- und Phosphorverbindungen verwendet. Beispiele für besonders geeignete Initiatoren sind Natriumhydrogensulfit, Natriumdisulfit, Natriumsulfit, Natriumthiosulfat, Natriumhypophosphit, phosphorige Säure, Mercaptopropionsäure, Mercaptoessigsäure, Mercaptoethanol und Alkalimetallsalze der genannten Säuren. Selbstverständlich können auch Mischungen der genannten Polymerisationsregler verwendet werden. Wenn ein Polymerisationsregler eingesetzt wird, liegen die verwendeten Mengen in der Regel bei 0,1 bis 10 Gew.-%, bevorzugt bei 1 bis 5 Gew.-%, bezogen auf die zu polymerisierenden Monomere.

Die Polymerisation kann kontinuierlich oder diskontinuierlich durchgeführt werden. Bei einer Batch-Fahrweise legt man zweckmäßigerweise Wasser als Polymerisationsmedium in einem Kessel vor, der mit Mischvorrichtung, Rückflußkühler und Wasserabscheider ausgestattet ist, erhitzt es auf die Polymerisationstemperatur und gibt nach dem Starten der Polymerisation kontinuierlich oder absatzweise das Veresterungsgemisch, Initiator und gegebenenfalls Regler zu.

Die Polymerisation kann bei Normaldruck, unter erhöhtem Druck oder auch unter vermindertem Druck durchgeführt werden.

Die Polymerisation erfolgt immer unter Sieden des Reaktionsgemisches.

Das durch die azeotrope Abdestillation des organischen Lösungsmittels ständig mitabdestillierte Wasser wird zurückgeführt oder durch Zufuhr von frischem Wasser ersetzt. Dadurch wird gewährleistet, daß die Menge an Wasser im Reaktionsgemisch während der Polymerisation praktisch konstant bleibt und sich in der Regel 20 bis 70 gew.-%ige, vorzugsweise 30 bis 50 gew.-%ige, Polymerisatlösungen bilden. Das im Veresterungsgemisch vorliegende organische Lösungsmittel verteilt sich im Polymerisationsreaktor auf eine relativ große Fläche und wird daher rasch aus dem System entfernt, wodurch sich die oben genannte Gleichgewichtskonzentration einstellt.

Das Azeotrop wird wie bei der Veresterungsreaktion kondensiert und in zwei Phasen getrennt. Die organische Phase kann vorteilhaft bei der Veresterung wiederverwendet werden. Sollte eine Reinigung notwendig sein, so kann beispielsweise eine Flüssig/flüssig-Extraktion mit Wasser durchgeführt werden. Das organische Lösungsmittel kann zur Reinigung jedoch auch destilliert oder einer Wasserdampfdestillation unterzogen werden.

Bei der oben beschriebenen Batch-Fahrweise kann man die Monomeren, den Initiator und gegebenenfalls den Regler dem Reaktor in 1 bis 20 h, insbesondere in 2 bis 10 h, zuführen. Nach Beendigung der Dosierung polymerisiert man das Reaktionsgemisch üblicherweise noch 0,1 bis 10 h, bevorzugt 0,5 bis 3 h, nach. Vorzugsweise führt man die Nachpolymerisation unter Sieden des Reaktionsgemisches durch. Dabei können gegebenenfalls Reste an organischem Lösungsmittel aus dem Polymerisationsgemisch herausdestilliert werden.

Nach der Polymerisation beträgt der Anteil an organischem Lösungsmittel in der wäßrigen Polymerisatlösung vorzugsweise < 100 ppm. Nach dem erfindungsgemäßen Verfahren ist es sogar möglich, das organische Lösungsmittel vollständig aus der bei der Polymerisation erhaltenen Mischung zu entfernen, so daß die Restgehalte an organischem Lösungsmittel von 0 bis 50 ppm, meistens 1 bis 30 ppm, betragen.

Um die Raum-Zeit-Ausbeute bei der Polymerisation durch ein schnelleres azeotropes Abdestillieren des organischen Lösungsmittels zu erhöhen, kann es vorteilhaft sein, Stickstoff oder Wasserdampf durch den Polymerisationsreaktor zu leiten.

Zur Neutralisation des Acrylsäure und Methacrylsäure als Comonomere enthaltenden Polymerisats kann man vor, während oder bevorzugt nach der Polymerisation eine Base zusetzen. Hierfür können alle basisch reagierenden Verbindungen verwendet werden. Geeignet sind z.B. Alkalimetalloxide, -hydroxide, -carbonate undhydrogencarbonate, wobei die Kalium- und vor allem die Natriumverbindungen bevorzugt sind, Erdalkalimetalloxide und -hydroxide, insbesondere die Magnesium-, Calcium- und Bariumverbindungen, Aluminiumhydroxid, Eisenhydroxid, Eisenoxid, Ammoniak und Amine wie Cyclohexylamin, Dicyclohexylamin, Butylamin, Ethanolamin, Diethanolamin, Triethanolamin und Morpholin. Bevorzugt wird Natriumhydroxid, insbesondere in Form von 10 bis 50 gew.-%igen wäßrigen Lösungen, zur Neutralisation eingesetzt.

Das Molgewicht M_{w} der erfindungsgemäßen Polymerisate beträgt in der Regel 1000 bis 100 000, bevorzugt 5000 bis 50 000.

Die erfindungsgemäßen Polymerisate eignen sich hervorragend als Zusatz für zementöse Systeme, insbesondere für Mörtel und Beton. Die Einsatzmenge der erfindungsgemäßen Polymerisate beträgt dabei üblicherweise 0,1 bis zu 5 Gew.-%, bezogen auf das zementöse System.

Die erfindungsgemäßen Polymerisate haben hervorragende Wirkung als Betonverflüssiger. Ihre Zusammensetzung kann gezielt auf das jeweilige zementöse System abgestimmt werden. Sie sind daher breit einsetzbar sowohl für verschiedene zementöse Systeme, unabhängig von deren Herkunft, Herstellung, Zusammensetzung und Zuschlägen wie Sand, Kies und Feinzuschlägen, als auch bei niedrigen und hohen Temperaturen, also im Winter und im Sommer, und unterschiedlichster Wasserqualität.

Sie können dem zementösen System als Pulver, Granulat, Schmelze oder als wäßrige Lösung (meist 30 bis 60 gew.-%ig) vor, während oder nach der Mahlung zugemischt werden.

Bei Zumischung vor der Mahlung der gebrannten Zementklinker zeigen sie gute Eigenschaften als Mahlhilfsmittel während des Mahlprozesses und bei der mechanischen Zerkleinerung des zementösen Systems.

### Beispiele

### A) Herstellung von erfindungsgemäßen Polymerisaten

Der Umsatz bei der Veresterung wurde NMR-spektroskopisch bestimmt. Der K-Wert der Polymerisate wurde nach H. Fikentscher, Cellulose-Chemie, Band 13, Seiten 58-64 und 71-74 (1932) in wäßriger Lösung bei einem pH-Wert von 7, einer Temperatur von 25°C und einer Konzentration des Natriumsalzes des Polymerisats von 1 Gew.-% bestimmt.

### Ester 1

In einem 2 l-Reaktor mit Gaseinleitungsrohr und Wasserabscheider wurde ein Gemisch aus 1000 g (1 mol) Methylpolyethylenglykol (M_{w} 1000), 86 g (1 mol) Methacrylsäure, 144 g (2 mol) Acrylsäure, 0,45 g Phenothiazin, 12 g p-Toluolsulfonsäurehydrat und 250 g Toluol unter Durchleiten von Stickstoff 7 h auf 135°C erhitzt, bis sich kein Wasser mehr bildete. Die Säurezahl der bei 40°C lagerfähigen, flüssigen Veresterungsmischung betrug 79 mg KOH/g.

### Ester 2

Analog zur Herstellung des Esters 1 wurde ein Gemisch aus 1000 g (1 mol) Methylpolyethylenglykol (M_{w} 1000), 120 g (1,4 mol) Methacrylsäure, 101 g (1,4 mol) Acrylsäure, 0,45 g Phenothiazin, 12 g p-Toluolsulfonsäurehydrat und 250 g Toluol umgesetzt. Die Säurezahl der bei 40°C lagerfähigen, flüssigen Veresterungsmischung betrug 73 mg KOH/g.

### Ester 3

Analog zur Herstellung des Esters 1 wurde ein Gemisch aus 1000 g (1 mol) Methylpolyethylenglykol (M_{w} 1000), 189 g (2,2 mol) Methacrylsäure, 72 g (1 mol) Acrylsäure, 0,5 g Phenothiazin, 12 g p-Toluolsulfonsäurehydrat und 360 g Toluol 7 h umgesetzt, bis sich kein Wasser mehr bildete. Die Säurezahl der bei 30°C lagerfähigen, flüssigen Veresterungsmischung betrug 80 mg KOH/g.

### Ester 4

Analog zur Herstellung des Esters 1 wurde ein Gemisch aus 1000 g (1 mol) Methylpolyethylenglykol (M_{w} 1000), 301 g (3,5 mol) Methacrylsäure, 72 g (1 mol) Acrylsäure, 0,7 g Phenothiazin, 14 g p-Toluolsulfonsäurehydrat und 270 g Toluol 7 h umgesetzt, bis sich kein Wasser mehr bildete. Die Säurezahl der bei 20°C lagerfähigen, flüssigen Veresterungsmischung betrug 120 mg KOH/g.

### Beispiel 1

In einem 2 l-Reaktor mit Gaseinleitungsrohr und Wasserabscheider wurden 500 g Wasser unter Durchleiten von Stickstoff bis zum Sieden erhitzt. Dann wurden gleichzeitig die Zuläufe 1 bis 3 gestartet: Zulauf 1: 350 g Ester 1; Zulauf 2: 55 g einer 8 gew.-%igen wäßrigen Natriumperoxodisulfatlösung; Zulauf 3: 15 g einer 40 gew.-%igen wäßrigen Natriumhydrogensulfitlösung. Zulauf 1 wurde in 6 h zudosiert, die Zuläufe 2 und 3 jeweils in 6,25 h.

Das Toluol wurde während der Polymerisation ständig als Azeotrop mit Wasser abdestilliert, das im Wasserabscheider in eine Wasserphase und eine Toluolphase getrennt wurde. Die Wasserphase wurde in den Polymerisationsreaktor zurückgeleitet, das Toluol wurde zur Wiederverwendung aufbewahrt. Nach Beendigung der Zuläufe wurde 1 h weiteres Wasser und restliches Toluol abdestilliert. Der Toluolrestgehalt in der Polymerisatlösung betrug < 20 ppm. Nach Abkühlen und Neutralisation mit 34 g 50 gew.-%iger Natronlauge auf pH 6,8 wurde eine klare 35 gew.-%ige Polymerisatlösung erhalten. Der K-Wert des Polymerisats betrug 33 und das Molgewicht M_{w} 32 100.

### Beispiel 2

Es wurde analog Beispiel 1 vorgegangen, jedoch wurden folgende Zuläufe verwendet: Zulauf 1: 350 g Ester 2; Zulauf 2: 55 g einer 8 gew.-%igen wäßrigen Natriumperoxodisulfatlösung; Zulauf 3: 15 g einer 40 gew.-%igen wäßrigen Natriumhydrogensulfitlösung. Zur Neutralisation wurden 30 g 50 gew.-%ige Natronlauge eingesetzt. Es wurde eine klare 35 gew.-%ige Polymerisatlösung vom pH-Wert 7,2 erhalten. Der K-Wert des Polymerisats betrug 33.

### Beispiel 3

Es wurde analog Beispiel 1 vorgegangen, jedoch wurden folgende Zuläufe verwendet: Zulauf 1: 375 g Ester 3; Zulauf 2: 55 g einer 8 gew.-%igen wäßrigen Natriumperoxodisulfatlösung; Zulauf 3: 18 g einer 40 gew.-%igen wäßrigen Natriumhydrogensulfitlösung. Zur Neutralisation wurden 36 g 50 gew.-%ige Natronlauge eingesetzt. Es wurde eine klare 35 gew.-%ige Polymerisatlösung vom pH-Wert 6,8 erhalten. Der K-Wert des Polymerisats betrug 33.

### Beispiel 4

Es wurde analog Beispiel 1 vorgegangen, jedoch wurden folgende Zuläufe verwendet: Zulauf 1: 350 g Ester 4; Zulauf 2: 56 g einer 8 gew.-%igen wäßrigen Natriumperoxodisulfatlösung; Zulauf 3: 33 g einer 40 gew.-%igen wäßrigen Natriumhydrogensulfitlösung. Zur Neutralisation wurden 52 g 50 gew.-%ige Natronlauge eingesetzt.

Es wurde eine klare 35 gew.-%ige Polymerisatlösung vom pH-Wert 6,9 erhalten. Der K-Wert des Polymerisats betrug 31.

### B) Anwendung von erfindungsgemäßen Polymerisaten

Anhand des Mörteltests gemäß DIN 1164 bzw. EN 196 wurde die Zement dispergierende Wirkung der Polymerisate aus Beispiel 1 bis 4 untersucht. Die Polymerisate aus Beispiel 2 bis 4 wurden dabei in verschiedenen Systemen getestet.

### Zement 1:

Die Einsatzmengen betrugen:
2,15 g 35 gew.-%ige wäßrige Polymerisatlösung
500 g Heidelberger Zement CEM I 32,5 R
1350 g CEN-Normsand
223 g Trinkwasser
0,35 Gew.-% eines handelsüblichen Entschäumers auf Basis von Phosphorsäureestern, bezogen auf das Polymerisat.

In Tabelle 1 ist die verflüssigende Wirkung der Polymerisate auf die Mörtelmischung anhand der Ausbreitmaße nach 1, 30 und 60 min dargestellt.

**Tabelle 1**

| Polymerisat aus Bsp. | Ausbreitmaß in cm gemäß DIN 1164 nach | | |
|---|---|---|---|
| | 1 min | 30 min | 60 min |
| 1 | 21,0 | 19,3 | 17,5 |
| 2 | 19,6 | 19,2 | 18,3 |
| 3 | 22,5 | 20,8 | 19,0 |
| 4 | 22,9 | 19,2 | 16,9 |

### Zement 2:

Die Einsatzmengen betrugen:
2,15 g 35 gew.-%ige wäßrige Polymerisatlösung
500 g Heidelberger Heidelberger CEM I 42,5 R
1350 g CEN-Normsand
208 g Trinkwasser
0,35 Gew.-% eines handelsüblichen Entschäumers auf Basis von Phosphorsäureestern, bezogen auf das Polymerisat.

In Tabelle 2 ist die verflüssigende Wirkung der Polymerisate auf die Mörtelmischung anhand der Ausbreitmaße nach 1, 30 und 60 min dargestellt.

**Tabelle 2**

| Polymerisat aus Bsp. | Ausbreitmaß in cm gemäß DIN 1164 nach | | |
|---|---|---|---|
| | 1 min | 30 min | 60 min |
| 2 | 18,5 | 18,5 | 17,3 |
| 3 | 22,4 | 19,8 | 17,9 |
| 4 | 22,5 | 18,2 | 16,5 |

### Zement 3:

Die Einsatzmengen betrugen:
2,15 g 35 gew.-%ige wäßrige Polymerisatlösung
500 g Milke Zement CEM I 52,5 R
1350 g CEN-Normsand
203 g Trinkwasser
0,35 Gew.-% eines handelsüblichen Entschäumers auf Basis von Phosphorsäureestern, bezogen auf das Polymerisat.

In Tabelle 3 ist die verflüssigende Wirkung der Polymerisate auf die Mörtelmischung anhand der Ausbreitmaße nach 1, 30 und 60 min dargestellt.

**Tabelle 3**

| Polymerisat aus Bsp. | Ausbreitmaß in cm gemäß DIN 1164 nach | | |
|---|---|---|---|
| | 1 min | 30 min | 60 min |
| 2 | 23,0 | 18,1 | 16,8 |
| 3 | 25,1 | 20,1 | 18,5 |
| 4 | 20,6 | 17,4 | 16,2 |

## Patentansprüche

1. Verwendung wasserlöslicher Polymerisate von Estern aus Acrylsäure, Methacrylsäure und Alkylpolyalkylenglykolen, erhältlich durch azeotrope Veresterung einer Mischung von Acrylsäure (A), Methacrylsäure (B) und einem Alkylpolyalkylenglykol (C) mit einem Molgewicht M_{w} von 350 bis 4000, in der das Molverhältnis von (A) zu (C) 0,1 bis 4 : 1, das Molverhältnis von (B) zu (C) 1 bis 5 : 1 und das Molverhältnis der Summe von (A) und (B) zu (C) 2 bis 6 : 1 beträgt, in Gegenwart eines organischen Lösungsmittels, das mit Wasser ein Azeotrop bildet, zu mindestens 85 Gew.-%, bezogen auf das Alkylpolyalkylenglykol (C), und anschließende radikalische Polymerisation des bei der Veresterung erhaltenen Gemisches in wäßrigem Medium, wobei man das organische Lösungsmittel während der Polymerisation azeotrop aus dem Reaktionsgemisch abdestilliert und das abdestillierte Wasser in das Gemisch zurückführt oder durch Zufuhr von frischem Wasser ersetzt, als Zusatz zu zementösen Systemen.

2. Verwendung nach Anspruch 1, bei denen als Alkylpolyalkylenglykol (C) ein Methylpolyalkylenglykol oder eine Mischung verschiedener Methylpolyalkylenglykole eingesetzt wird.

3. Verwendung nach Anspruch 1 oder 2, bei denen als Alkylpolyalkylenglykol (C) ein Methylpolyethylenglykol der Molmasse M_{w} 500 bis 2000 oder eine Mischung dieser Methylpolyethylenglykole eingesetzt wird.

4. Verwendung nach den Ansprüchen 1 bis 3, bei denen der Gehalt an organischem Lösungsmittel im erhaltenen Veresterungsgemisch vor der Polymerisation ≤ 40 Gew.-% beträgt.

5. Verwendung nach den Ansprüchen 1 bis 4, bei denen die Säuregruppen nach, während oder vor der Polymerisation zumindest teilweise mit Basen neutralisiert werden.

6. Verwendung nach den Ansprüchen 1 bis 5, bei denen die Polymerisation in Gegenwart von 0,1 bis 10 Gew.-% Polymerisationsregler, bezogen auf die zu polymerisierenden Monomere, durchgeführt wird.

7. Verwendung von wasserlöslichen Polymerisaten gemäß den Ansprüchen 1 bis 6 als Verflüssiger für wasserhaltige zementöse Systeme.

8. Verwendung von wasserlöslichen Polymerisaten gemäß den Ansprüchen 1 bis 6 als Mahlhilfsmittel für zementöse Systeme.

## Claims

1. The use of water-soluble polymers of esters made from acrylic acid and methacrylic acid and alkylpolyalkylene glycols, obtainable by azeotropic esterification of a mixture of acrylic acid (A), methacrylic acid (B), and an alkylpolyalkylene glycol (C) with a molecular weight M_{w} of from 350 to 4000, where in the mixture the molar ratio of (A) to (C) is from 0.1 to 4 : 1, the molar ratio of (B) to (C) is from 1 to 5 : 1, and the molar ratio of the entirety of (A) and (B) to (C) is from 2 to 6 : 1, in the presence of at least 85% by weight, based on the alkylpolyalkylene glycol (C) of an organic solvent which forms an azeotrope with water, followed by free-radical polymerization of the mixture obtained during the esterification in an aqueous medium, where the organic solvent is distilled off azeotropically from the reaction mixture during the polymerization, and the water removed by distillation is returned to the mixture or replaced by a feed of fresh water, as an additive to cementitious systems.

2. The use according to claim 1, where the alkylpolyalkylene glycol (C) used comprises a methylpolyalkylene glycol or a mixture of various methylpolyalkylene glycols.

3. The use according to claim 1 or 2, where the alkylpolyalkylene glycol (C) used comprises a methylpolyethylene glycol of molecular weight M_{w} from 500 to 2000 or a mixture of these methylpolyethylene glycols.

4. The use according to any of claims 1 to 3, where the content of organic solvent in the esterification mixture obtained prior to the polymerization is s 40% by weight.

5. The use according to any of claims 1 to 4, where, prior to or during the polymerization, at leasst some of the acid groups are neutralized with bases.

6. The use according to any of claims 1 to 5, where the polymerization is carried out in the presence of from 0.1 to 10% by weight of polymerization regulators, based on the monomers to be polymerized.

7. The use of water-soluble polymers according to any of claims 1 to 6 as a plasticizer for aqueous cementitious systems.

8. The use of water-soluble polymers according to any of claims 1 to 6 as a grinding aid for cementitious systems.

## Revendications

1. Utilisation de polymères solubles dans l'eau d'esters d'acide acrylique, d'acide méthacrylique et d'alkylpolyalkylène glycols, que l'on peut obtenir par estérification azéotropique d'un mélange d'acide acrylique (A), d'acide méthacrylique (B) et d'un alkylpolyalkylène glycol (C) d'un poids moléculaire M_{w} de 350 à 4000, où la proportion molaire de (A) à (C) est de 0,1 à 4 : 1; la proportion molaire de (B) à (C) est de 1 à 5 : 1 et la proportion molaire de la somme de (A) et (B) à (C) est de 2 à 6 : 1, en présence d'un solvant organique, qui forme avec l'eau un azéotrope, à au moins 85% en poids, par rapport à l'alkylpolyalkylène glycol (C), et polymérisation radicalaire subséquente du mélange obtenu lors de l'estérification dans un milieu aqueux, où l'on élimine le solvant organique du mélange réactionnel par distillation azéotropique pendant la polymérisation, et l'eau éliminée par distillation est renvoyée dans le mélange ou remplacée par une amenée d'eau fraîche, comme additifs pour systèmes cimenteux.

2. Utilisation suivant la revendication 1, dans laquelle on met en oeuvre en tant qu'alkylpolyalkylène glycol (C) un méthylpolyalkylène glycol ou un mélange de différents méthylpolyalkylène glycols.

3. Utilisation suivant la revendication 1 ou 2, dans laquelle on met en oeuvre en tant qu'alkylpolyalkylène glycol (C) un méthylpolyéthylène glycol d'une masse molaire M_{w} de 500 à 2000 ou un mélange de ces méthylpolyéthylène glycols.

4. Utilisation suivant les revendications 1 à 3, dans laquelle la teneur en solvant organique du mélange d'estérification obtenu avant la polymérisation est < 40% en poids.

5. Utilisation suivant les revendications 1 à 4, dans laquelle les groupes acides sont, après, pendant ou avant la polymérisation, au moins partiellement neutralisés par des bases.

6. Utilisation suivant les revendications 1 à 5, dans laquelle la polymérisation est entreprise en présence de 0,1 à 10% en poids de régulateur de polymérisation, par rapport aux monomères à polymériser.

7. Utilisation de polymères solubles dans l'eau suivant les revendications 1 à 6 en tant que fluidifiants pour systèmes cimenteux contenant de l'eau.

8. Utilisation de polymères solubles dans l'eau suivant les revendications 1 à 6 en tant qu'adjuvants de broyage pour systèmes cimenteux.
